# EUROPÄISCHE PATENTSCHRIFT

(11) **EP 2 457 714 B1**
(45) Veröffentlichungstag und Bekanntmachung des Hinweises auf die Patenterteilung: **07.09.2016**
(21) Anmeldenummer: 11191201.0
(22) Anmeldetag: 29.11.2011
(51) Int. Cl.: B29C 47/10, D01B 1/14, D21B 1/00, B27N 1/00

(54) **Verfahren zur Herstellung von Faserstoffen und daraus hergestellte Erzeugnisse**
Method for producing fibres and products thereof
Procédé de fabrication des fibres et de matières fibreuses

(30) Priorität: 29.11.2010 DE 102010062153
(43) Veröffentlichungstag der Anmeldung: 30.05.2012
(73) Patentinhaber: Leibniz-Institut für Agrartechnik Potsdam-Bornim e.V. (ATB), 14469 Potsdam (DE); BHS GmbH & Co. KG, 01109 Dresden (DE)
(72) Erfinder: Pecenka, Ralf, 14471 Potsdam (DE); Ullrich, Siegmar, 01825 Liebstadt (DE)
(74) Vertreter: Müller & Schubert

(56) Entgegenhaltungen:
- EP-A1- 1 130 139
- EP-A2- 0 971 065
- WO-A1-03/079763
- WO-A1-2004/053211
- DE-A1- 10 019 824
- DE-A1- 19 710 589
- DE-A1-102006 016 488
- US-A1- 2001 047 738

## Beschreibung

Die vorliegende Erfindung betrifft ein Verfahren zur Herstellung von Faserstoffen als stabilisierender Zuschlagstoff für Splittmastixasphalt, nach diesem Verfahren hergestellte Faserstoffe und Faserstoffpellets sowie die Verwendung der Faserstoffe und Splittmastixasphalt, enthaltend diese Faserstoffe.

Splittmastixasphalt (SMA) besteht aus grober Gesteinskörnung (Edelsplitt) mit hohem Grobkornanteil, feiner Gesteinskörnung (Brechsand), Füller (Gesteinsmehl), Bitumen (Straßenbaubitumen oder polymermodifiziertem Bitumen) und stabilisierenden Zusätzen, wie beispielsweise Faserstoffe. Seit vielen Jahren hat sich dieser Straßenbaustoff unter höchsten Verkehrsbelastungen im gesamten europäischen Ausland und Deutschland bewährt. Zusammensetzung und Anforderungen an Splittmastixasphalt (SMA) sind in der DIN EN 13108 Teil 5, bzw. der deutschen Umsetzung, TL Asphalt-StB 07, geregelt.

Faserzusätze in Stoffgemischen sind in vielfältigen Anwendungen bekannt. Typische Anwendungen findet man im Einsatz von Fasern als Verstärkungsfaser in Matrixwerkstoffen wie beispielsweise Kunststoffen. Ein Verfahren zur Herstellung solcher Fasern wird in EP 0 971 065 A2 beschrieben. Verfahren zur dosierfähigen Aufbereitung und zur Einbringung der Fasern in die Matrix werden in der US 2010/0163192 A1 und der DE 600 14 256 T2 offenbart. In solchen Werkstoffen - auch als Verbundwerkstoffe oder Composite bezeichnet - erfüllen die Fasern die Funktion einer mechanischen Verstärkung des Werkstoffes.

Der Verbundwerkstoff besitzt dabei andere Werkstoffeigenschaften als seine einzelnen Komponenten. Für die Eigenschaften der Verbundwerkstoffe sind stoffliche Eigenschaften und Geometrie der Komponenten von Bedeutung. Die Verbindung erfolgt durch Stoff- oder Formschluss oder eine Kombination von beidem. Vorrangiges Ziel ist die Erhöhung der mechanischen Festigkeit einer Matrix von geringerer Festigkeit durch den Einbau von Fasern höherer Festigkeit. Die üblicherweise eingesetzten Fasermengen liegen je nach Faserstoff und Werkstoffanwendung in Bereichen von 10 bis 90 %.

Normaler Asphalt in der Ausführung als Walzasphalt enthält etwa 3 - 7,5 % Bitumen. Das Bitumen stellt somit aufgrund seines geringen Anteils im Vergleich zur Kunststofffraktion in Verbundwerkstoffen nicht eine Matrixkomponente dar, sondern dient lediglich als Klebstoff (Mastix)zwischen den anderen Bestandteilen des Gemisches. Splittmastixasphalt (SMA) ist Walzasphalt mit Bitumenanteilen im oberen Segment (6 - 7,5 %). Der Faseranteil im SMA liegt bei ca. 0,3 % (vgl. Verbundwerkstoffe 10 bis 90%). Daraus wir deutlich, dass die in SMA eingesetzten Fasern eine grundlegend andere Funktion erfüllen und entsprechend besondere Eigenschaften aufweisen müssen.

Im SMA hat das Bitumen zwei Funktionen. Einmal dient es als Klebemittel zwischen dem Gestein und zusätzlich der Erhöhung der Dauerhaftigkeit der Fahrbahnoberfläche, dem Langzeitverhalten. Das Langzeitverhalten soll durch einen sehr dicken Bindemittelfilm erzielt werden. Gesteinsgemische können, um über die gesamte technologische Kette von der Herstellung über Silolagerung, Transport und Einbau homogen zu bleiben, nur ein bestimmtes Bindemittelvolumen aufnehmen. Bei zu hohem Bindemittelgehalt kommt es zum Ablaufen des Bindemittels vom Gestein, d.h. zu Inhomogenität.

Stabilisierende Zusätze in Form von Fasern in SMA erfüllen grundlegend eine andere Funktion als Fasern in Verbundwerkstoffen. Sie dienen nicht der Erhöhung der Festigkeit im Gesamtgemisch aufgrund besonderer mechanischer Faserkennwerte, sondern sollen lediglich das Ablaufen des bis zum Einbau flüssigen Bitumens von der Gesteinsoberfläche verhindern. Somit werden für diesen Einsatzzweck speziell modifizierte Faserstoffe benötigt, deren vorzügliche Eigenschaft nicht in ihrer hohen Festigkeit, sondern in ihrem hohen Saug- bzw. Bindevermögen gegenüber Flüssigkeiten insbesondere Bitumen liegen. Diese besondere Eigenschaft wird mit den gängigen Verfahren der Faseraufbereitung nicht angestrebt, da die Aufnahme von Flüssigkeiten z.B. durch Fasern in Verbundwerkstoffen oder Faserwerkstoffen der Holzindustrie zu einer Dickenquellung der Endprodukte führt. Eine Dickenquellung führt neben der Veränderung der geometrischen Dimensionen auch zu einer Minderung der Materialfestigkeit. Folglich sind die bisher eingesetzten Verfahren der Fasergewinnung für eine Herstellung von Fasern mit minimalem Saugvermögen für Flüssigkeiten optimiert.

Weitere Verfahren und Vorrichtungen zur Herstellung von Verstärkungsfasern sind beispielsweise bekannt aus DE-A 19813397, DE-A 19918166, DE-A 19841092 oder
DE-A 19626557.

Als stabilisierende Zusätze zur optimierten Bitumenverteilung können organische Faserstoffe mit Faserlängen bis 5 mm und Faserdicken von bis 45 µm, welche ggf. bereits mit Bitumen umhüllt oder mit Talkum gepudert sind, mineralische und zur besseren Bitumenhaftung beschichtete mineralische Faserstoffe, kugelförmige Kieselsäurepartikel mit einem Durchmesser bis 100 µm, Polymere in Granulat oder Pulverform und Kieselgur eingesetzt werden. Diese stabilisierenden Zusätze werden in der Regel in Paketform, Big Bags oder in Silozügen den Mischwerken bereitgestellt und müssen mit einer geeigneten Dosiertechnik dem Mischprozess zugeführt werden.

Werden organische Faserstoffe eingesetzt, so werden diese vorrangig aus recyceltem Altpapier gewonnen. Nachteilig ist hierbei, dass Altpapier nicht immer in gleichbleibender Qualität und Menge kostengünstig zur Verfügung steht. Enthält das Papier zu hohe Anteile an Hochglanzpapier, wird die Saugfähigkeit des daraus hergestellten Faserstoffes gemindert und es kommt beim Einbau des damit hergestellten Splittmastixasphalts zu Qualitätsmängeln in Form von Bindemittelanhäufungen, die als glänzende Flecken an der Oberfläche der Straßendecke sichtbar werden.

Alternativ zu Recyclingpapier sind auch Untersuchungen zum Einsatz von Recycling-Jute oder Schilf bekannt. Der hieraus gewonnene Faserstoff steht bisher jedoch nicht in der erforderlichen Qualität, mit gleichbleibenden Saugeigenschaften in der erforderlichen Menge zur Verfügung.

Nachteile der bisherigen Verfahren sind:
- Recyclingpapier steht nicht in der erforderlichen gleichbleibenden Qualität und Menge zur Verfügung.
- Die Herstellung von Faserstoff aus Recyclingpapier für den Einsatz als stabilisierender Zuschlagstoff in Asphalt ist mit hohem manuellem Aufwand in der Rohstoffvorbereitung und einem hohen Energiebedarf in der Zerfaserung und der anschließenden Faserstofftrocknung verbunden.
- Das Zerfasern von landwirtschaftlichen Rohstoffen mit den bekannten Technologien, basierend auf Hammermühle, Scheibenrefiner oder Defibrator, ist sehr kosten- und energieintensiv sowie die erzeugten Faserstoffe nicht von der geforderten Qualität.

Der Erfindung liegt die Aufgabe zugrunde, ein Verfahren zur Herstellung von Faserstoffen zur Verfügung zu stellen, bei dem preiswerte Rohstoffalternativen aus der Land- und Forstwirtschaft in Form von Stroh oder Gehölzen genutzt werden und daraus ein gleichmäßig aufgeschlossener Faserstoff entsprechend hoher Feinheit und mit ausreichenden Saugeigenschaften kostengünstig hergestellt werden kann.

Mit der Nutzung des erfindungsgemäßen Verfahrens, bei dem die Zerfaserung des organischen Rohstoffs mit einer Kombination aus einem Schneckenextruder (Schneckenpresse, Einschnecken- oder Doppelschneckenextruder) und eines Scheibenrefiners erfolgt, wird die Aufgabe gelöst. Organische Faserstoffe mit den erforderlichen morphologischen Eigenschaften können hiermit beispielsweise aus trockenen oder feucht-konservierten landwirtschaftlichen Faserpflanzen, Leguminosen, Getreide- und Rapsstroh, Miscanthus oder Holz von Kurzumtriebsplantagen - ggf. auch in Mischung verschiedener Rohstoffe - hergestellt werden. Ebenso können Gärreststoffe z.B. aus der Biogasgewinnung oder Reststoffe aus der Papierherstellung zugesetzt werden. Besonders geeignet sind auch Treber aus der Bier- oder Weinherstellung.

Die Aufgabe wird durch ein Verfahren zur Herstellung von Faserstoffen gelöst, welches die Merkmale des Hauptanspruchs 1 aufweist. Vorteilhafte Weiterbildungen sind in den abhängigen Unteransprüchen gekennzeichnet.

Erfindungsgemäß bevorzugt ist ein Verfahren, wobei man nach dem Schritt a) folgende Zwischenschritte ausführt: a1) Dosieren von in Schritt a) vorzerkleinerten Faserrohstoffen aus unterschiedlichen Faserrohstoffquellen und a2) Mischen der aus unterschiedlichen Faserrohstoffquellen stammenden vorzerkleinerten Faserrohstoffe.

Erfindungsgemäß bevorzugt ist auch ein Verfahren, wobei man nach dem Schritt b) einen weiteren Zerkleinerungsschritt ausführt:
c) Zerkleinerung des im Schritt b) erhaltenen Faserstoffe mittels einer Scheibenmühle.

Erfindungsgemäß weiterhin bevorzugt ist auch ein Verfahren, wobei man nach dem Schritt b) oder dem Schritt c) die folgenden Schritte ausführt:
d) Trocknen der erhaltenen Faserstoffe.

Erfindungsgemäß bevorzugt ist ein Verfahren, wobei man die erhaltenen Faserstoffe pelletiert, wobei man die Pelletierung gegebenenfalls unter Zusatz von Bindestoffen und gegebenenfalls die Pelletierung gleichzeitig als Nachmahlung durchführt.

Erfindungsgemäß bevorzugt ist auch ein Verfahren, wobei man im Schritt b) als Schneckenextruder einen Einschneckenextruder, einen Doppelschneckenextruder oder eine Schneckenpresse einsetzt.

Erfindungsgemäß bevorzugt ist ein Verfahren, wobei im Schritt c) der Wassergehalt in der Scheibenmühle bei einem Mahlspalt von 0,1 bis 0,3 mm höchstens 60% beträgt.

Erfindungsgemäß ganz besonders bevorzugt ist ein Verfahren, wobei man als Faserrohstoffquelle trocken- oder feucht-konservierte Ganzpflanzen oder Pflanzenteile wie Hanf, Flachs, Öllein, Leguminosen, Mais, Raps, Getreide, Miscanthus, Schilf, Gras oder Landschaftspflegegut oder Gehölze wie Pappel, Weide und Robinien von Kurzumtriebsplantagen oder Altpapier sowie zellulosehaltige Reststoffe der Papierindustrie oder Holz oder Gärreste aus der Biogasgewinnung oder Treber, insbesondere Biertreber, sowie Mischungen aus den genannten Faserrohstoffquellen einsetzt.

Gegenstand der Erfindung ist daher ein Verfahren zur Herstellung von Faserstoffen als stabilisierender Zuschlagstoff für Splittmastixasphalt, das sich dadurch auszeichnet, dass die Grobzerfaserung in einem Schneckenextruder und die Nachvermahlung in einer Scheibenmühle oder Pelletierpresse erfolgt.

Erfindungsgemäß wird als Schneckenextruder ein Einschneckenextruder, ein Doppelschneckenextruder oder eine Schneckenpresse einsetzt.

Das erfindungsgemäße Verfahren zeichnet sich besonders dadurch aus, dass der Wassergehalt im Schneckenextruder 30 bis 75% und die Temperatur 100 bis 150 °C beträgt. Erfindungsgemäß beträgt der Wassergehalt in der Scheibenmühle bei einem Mahlspalt von 0,1 bis 0,3 mm höchstens 60%.

Als Rohstoffe werden erfindungsgemäß trocken- oder feucht-konservierte Ganzpflanzen oder Pflanzenteile wie Hanf, Flachs, Öllein, Leguminosen, Mais, Raps, Getreide, Miscanthus, Schilf, Gras oder Landschaftspflegegut oder Gehölze wie Pappel, Weide und Robinien von Kurzumtriebsplantagen oder Altpapier sowie zellulosehaltige Reststoffe der Papierindustrie oder Holz oder Gärreste aus der Biogasgewinnung oder Treber, insbesondere Biertreber, sowie Mischungen aus den genannten Faserrohstoffquellen eingesetzt.

Erfindungsgemäß wird als Rohstoff auch eine Mischung von unterschiedlichen Faserrohstoffen mit Altpapier oder Reststoffen aus der Papierherstellung und/oder Holz und/oder Gärresten aus der Biogasgewinnung einsetzt.

Das erfindungsgemäße Verfahren zeichnet sich bevorzugt des Weiteren dadurch aus, dass man den Faserstoff nach der Vermahlung trocknet und die sich anschließende Pelletierung des Faserstoffes unter Zusatz von Bindemitteln durchführt.

Ein Gegenstand der Erfindung sind ferner Faserstoffe, hergestellt nach einem erfindungsgemäßen Verfahren wie oben dargestellt. Bevorzugt sind dabei Faserstoffe, wobei der Schlankheitsgrad der Faserstoffe weniger als 25, vorzugsweise weniger als 20, besonders bevorzugt weniger als 15 und ganz besonders bevorzugt weniger als 10 beträgt.

Ein weiterer Gegenstand der Erfindung sind Faserstoffpellets, enthaltend erfindungsgemäße Faserstoffe hergestellt nach einem erfindungsgemäßen Verfahren wie oben dargestellt sowie gegebenenfalls übliche Bindemittel und/oder Pelletierungshilfsstoffe. Derartige Bindemittel und Pelletierungshilfsstoffe sind dem Fachmann bekannt.

Ein weiterer Gegenstand der Erfindung ist auch die Verwendung von erfindungsgemäßen Faserstoffen oder Faserstoffpellets als stabilisierender Zuschlagstoff für Splittmastixasphalt.

Ein weiterer Gegenstand der Erfindung ist schließlich Splittmastixasphalt, enthaltend neben Gestein, Bitumen bzw. Asphalt, erfindungsgemäße Faserstoffe. Dabei ist bevorzugt, dass der Splittmastixasphalt zwischen 0,1 und 0,5 Gew.-% Faserstoffe, bevorzugt zwischen 0,2 und 0,4 Gew.-% und besonders bevorzugt 0,3 Gew.-% Faserstoffe enthält.

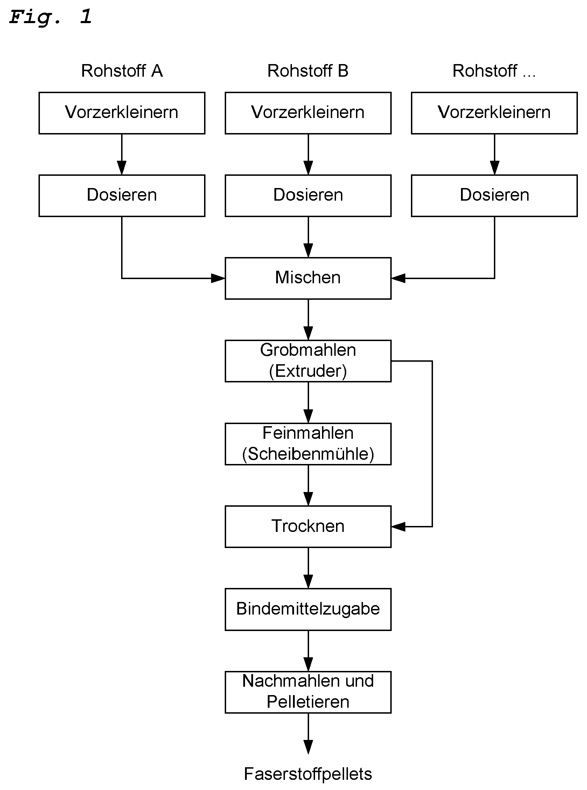

Die vorliegende Erfindung wird anhand des nachfolgenden Beispiels und der Figur 1 näher erläutert.

Figur 1 zeigt ein Fließbild eines Ausführungsbeispiels des erfindungsgemäßen Verfahrens.

### Ausführungsbeispiel:

Um aus den Rohstoffen Fasern ausreichender Qualität herzustellen, sind jedoch rohstoffspezifisch geeignete Betriebsparameter (Feuchte, Temperatur, Mahlspalt, Mahlgarnitur) einzustellen. Der Rohstoff muss zunächst z.B. mit einer Schneid- oder Häckseleinrichtung grob vorzerkleinert werden, um gleichmäßig in den sich anschließenden Extruder dosiert werden zu können. Die Vorzerkleinerung kann bereits bei der Ernte erfolgen. Im Extruder erfolgt zunächst eine Grobzerfaserung des Faserrohstoffs. Wird der Faserrohstoff im Extruder mit Wassergehalten von 30 bis 60 % und bei Prozesstemperaturen von 100 bis 150 °C zerfasert, kommt es im Mahlraum des Extruders zur Bildung von Wasserdampf. Durch diese Wasserdampfbildung erfolgt ein zusätzlicher Aufschluss der Faserbündel, Klebeverbindungen zwischen den Fasern werden partiell zerstört und feine, an den Enden aufgespleißte Faserstrukturen mit den erforderlichen Saugeigenschaften erzeugt. Bei der sich anschließenden Nachvermahlung wird der Faserstoff bei Mahlspalten von 0,1 bis 0,3 mm in einer Scheibenmühle bei Wassergehalten von max. 60 % homogenisiert. In diesem Prozess werden die im Extruder erzeugten Fasern auf Längen von 0,5 bis 5 mm eingekürzt und nicht ausreichend zerfaserte Partikel - wie sie häufig aus dem verholzten Kern von Pflanzenstängeln gebildet werden - auf Breiten von max. 0,3 mm nachzerkleinert. Soll der Faserstoff anschließend pelletiert werden, kann die Funktion der Nachzerkleinerung auch von der Pelletierpresse (Flach- oder Ringmatrizenpresse) übernommen werden. Als Faserrohstoff sind für dieses Verfahren vorrangig geeignet: Hanf, Getreide- und Rapsstroh, Miscanthus, Schilf, Leguminosen, Mais, Flachs- und Ölleinstroh sowie Pappel, Weide und Robinie von Kurzumtriebsplantagen. Die landwirtschaftlichen Rohstoffe können sowohl als Stroh mit Wassergehalten von 12 - 18 % oder als feucht-konservierte Ganzpflanzenmasse mit Wassergehalten von 50 bis 75 % bereitgestellt werden. Der für die Verarbeitung notwendige Wassergehalt lässt sich durch Trocknung bzw. Befeuchtung oder durch eine Mischung unterschiedlicher Rohstoffe mit geeigneten Wassergehalten vor der Extrudierung einstellen. Ebenso ist eine Beimischung von Altpapier oder Reststoffen aus der Papierherstellung und/oder Gärresten aus der Biogasgewinnung möglich.

Der erfindungsgemäße Verfahrensablauf ist in der Figur 1 dargestellt. Erfindungsgemäß ist es vorgesehen, dass Faserrohstoffe aus den unterschiedlichsten Faserrohstoffquellen gleichzeitig verarbeitet werden können. Insbesondere können Faserrohstoffen aus einer bis zu gleichzeitig vier oder mehr Faserrohstoffquellen verlustfrei zu einem Faserstoff verarbeitet werden.

### Als Rohstoffe können insbesondere

- Trockene oder feucht-konservierte landwirtschaftliche Faserpflanzen, Futterpflanzen wie Mais oder Gras sowie Getreide- und Rapsstroh
- Landschaftspflegegut, Miscanthus, Schilf oder Holz von Kurzumtriebsplantagen
- Zellulosehaltige Reststoffe der Papierindustrie
- Gärreste aus der Biogasgewinnung
verwendet werden.

Diese Rohstoffe (A, B, ...) werden zunächst derart vorzerkleinert, damit diese in den Extruder eingebracht werden können. Die Rohstoffe aus den unterschiedlichen Quellen werden dann dosiert und gemischt. Dabei wird die Dosierung derart gesteuert, dass die Mischung bereits die für die spätere Vermahlung im Extruder erforderliche Feuchtigkeit aufweist. Die Mischung aus den verschiedenen Faserrohstoffen wird dann in den Extruder eingebracht und Vermahlen. Genügt der Schlankheitsgrad der Faserstoffe nicht den Anforderungen (< 25), so werden die erhaltenen Faserstoffe einem weiteren Mahlvorgang in einer Scheibenmühle unterworfen, bis der Schlankheitsgrad von weniger als 25 erreicht ist. Die so erhaltenen Faserstoffe werden dann getrocknet. Anschließend können die Faserstoffe einer Pelletierung unterworfen werden. Dazu werden übliche Hilfsmittel wie Bindemittel oder dergleichen zugesetzt, um stabile Pellets zu erhalten. Pellets haben den Vorteil, dass sich diese genau und in einfacher Weise dosieren lassen, wenn der Asphalt in entsprechenden Mischmaschinen hergestellt wird. Durch den Mischvorgang in Gegenwart der Gesteine werden die Pellets wieder zerlegt und die Faserstoffe homogen im Splittmastixasphalt verteilt.

Das erfindungsgemäße Verfahren weist die folgenden Vorteile auf:
- Feinvermahlung je nach Rohstoff bzw. Rohstoffgemisch in Scheibenmühle und/oder Pelletierpresse
- Kein Waschen oder Plastifizieren erforderlich
- Der gesamte Rohstoff wird verlustfrei zu einem Endprodukt verarbeitet
- Die Saugeigenschaft wird durch ein feines Aufspleißen der Enden der Faserbündel erreicht. Durch die Kombination von Extruder und Scheibenmühle und den Betrieb dieser Einrichtungen unter spezifischen Betriebsparametern kann ein Faserstoff mit diesen erforderlichen besonderen Eigenschaften erzeugt werden. Ein Merkmal für diese Eigenschaft liegt im erzielten mittleren Schlankheitsgrad (Median x₅₀) der Fasern (Längen-Breiten-Verhältnis, l/d). Während für diesen Schlankheitsgrad bei den bekannten Fasern für Anwendungen als Verstärkungsfaser oder in Holzwerkstoffen üblicherweise Verhältnisse l/d von 25 bis 100 angestrebt werden, werden mit den hier dargestellten Verfahren l/d-Werte kleiner 25 erzielt (Tabelle 1).

**Tabelle 1: Längen und Schlankheitsgrade**

| Faserstoff | Länge (x₅₀) [mm] | Schlankheitsgrad l/d |
|---|---|---|
| Hanfkonservat | 1,8 | 21 |
| Flachskonservat | 1,5 | 15 |
| Rapsstroh | 1,2 | 9 |
| Grasschnitt | 1,2 | 10 |
| Schilf/Miscanthus | 1,1 | 11 |
| Getreidestroh | 1,3 | 10 |

Anhand der in Tabelle 1 angegebenen Faserlängen wird deutlich, dass sich die mit dem erfindungsgemäßen Verfahren hergestellten Faserstoffe deutlich von den üblichen Faserstoffen der Verbundwerkstoffindustrie unterscheiden. Während bei Verbundwerkstoffen von den Faserrohstoffen Faserlängen von 10 bis 40 mm gefordert werden, liegen die hier angestrebten Faserlängen im Bereich 0,5 bis 3 mm. Nur wenn diese geringen Faserlängen erreicht werden, ist ein späteres gleichmäßiges Verteilen der Fasern auf der Gesteinsoberfläche möglich, so dass auch bei den geringen Einsatzmengen von 0,1 bis 0,5 % die erforderliche Güte der gleichmäßigen Bitumenverteilung erzielt wird.

Die Mengenverhältnisse in einem erfindungsgemäßen Splittmastixasphalt (SMA) werden anhand der Tabelle 2 deutlich:

**Tab. 2: Zusammensetzung von SMA**

| Gestein | Bitumen | Faserstoffe |
|---|---|---|
| 92, 2 ... 93,2 % | 6,5 ... 7,5 % | 0,3 % |

Die beschriebene Erfindung eines rohstoffflexiblen und aufwandsminimierten Verfahrens zur Herstellung hochwertiger Faserstoffe als stabilisierender Zuschlagstoff für Splittmastixasphalt aus landwirtschaftlichen Roh- und Reststoffen bietet folgende weitere Vorteile:
- Nutzung bekannter, vorhandener, optimaler Ernteverfahren und Erntetechniken für die preisgünstige Rohstoffbereitstellung.
- Erschließung bisher nicht genutzter landwirtschaftlicher Rohstoffalternativen.
- Zerfaserung mit einem geringen technischen und energetischen Aufwand.
- Höhere Rohstoffflexibilität, da nicht nur aufbereitete Rohstoffe in Form von Stroh, Altpapier oder entrindetem Holz genutzt werden können, sondern die Ganzpflanze inklusive Blättern, Rinde und Blütenstand weitgehend verlustfrei verarbeitet werden kann.

## Patentansprüche

1. Verfahren zur Herstellung von Faserstoffen als stabilisierender Zuschlagstoff für Splittmastixasphalt, wobei man die folgenden Schritte ausführt:
a) Vorzerkleinerung der Faserrohstoffe aus einer Faserrohstoffquelle;
b) Zerkleinerung der Faserrohstoffe in einem Schneckenextruder derart, dass der Schlankheitsgrad der erhaltenen Faserstoffe weniger als 25 beträgt, wobei der Wassergehalt im Schneckenextruder 30 bis 75% und die Temperatur 100 bis 150°C beträgt.

2. Verfahren, gemäß Anspruch 1, **dadurch gekennzeichnet, dass** man nach dem Schritt a) folgende Zwischenschritte ausführt:
a1) Dosieren von in Schritt a) vorzerkleinerten Faserrohstoffen aus unterschiedlichen Faserrohstoffquellen und
a2) Mischen der aus unterschiedlichen Faserrohstoffquellen stammenden vorzerkleinerten Faserrohstoffe.

3. Verfahren, gemäß einem der voranstehenden Ansprüche, **dadurch gekennzeichnet, dass** man nach dem Schritt b) einen weiteren Zerkleinerungsschritt ausführt:
c) Zerkleinerung des im Schritt b) erhaltenen Faserstoffe mittels einer Scheibenmühle.

4. Verfahren, gemäß einem der voranstehenden Ansprüche, **dadurch gekennzeichnet, dass** man nach dem Schritt b) oder dem Schritt c) die folgenden Schritte ausführt: d) Trocknen der erhaltenen Faserstoffe.

5. Verfahren, gemäß einem der voranstehenden Ansprüche, **dadurch gekennzeichnet, dass** man die erhaltenen Faserstoffe pelletiert, wobei man die Pelletierung gegebenenfalls unter Zusatz von Bindestoffen und gegebenenfalls die Pelletierung gleichzeitig als Nachmahlung durchführt.

6. Verfahren, gemäß einem der voranstehenden Ansprüche, **dadurch gekennzeichnet, dass** man im Schritt b) als Schneckenextruder einen Einschneckenextruder, einen Doppelschneckenextruder oder eine Schneckenpresse einsetzt.

7. Verfahren, gemäß einem der Ansprüche 3 bis 6, **dadurch gekennzeichnet, dass** im Schritt c) der Wassergehalt in der Scheibenmühle bei einem Mahlspalt von 0,1 bis 0,3 mm höchstens 60% beträgt.

8. Verfahren, gemäß einem der voranstehenden Ansprüche, **dadurch gekennzeichnet, dass** man als Faserrohstoffquelle trocken- oder feucht-konservierte Ganzpflanzen oder Pflanzenteile wie Hanf, Flachs, Öllein, Leguminosen, Mais, Raps, Getreide, Miscanthus, Schilf, Gras oder Landschaftspflegegut oder Gehölze wie Pappel, Weide und Robinien von Kurzumtriebsplantagen oder Altpapier sowie zellulosehaltige Reststoffe der Papierindustrie oder Holz oder Gärreste aus der Biogasgewinnung oder Treber, insbesondere Biertreber, sowie Mischungen aus den genannten Faserrohstoffquellen einsetzt.

9. Faserstoffe, hergestellt nach einem Verfahren gemäß den Ansprüchen 1 bis 8.

10. Faserstoffe, gemäß Anspruch 9, **dadurch gekennzeichnet, dass** der Schlankheitsgrad der Faserstoffe weniger als 25, vorzugsweise weniger als 20, besonders bevorzugt weniger als 15 und ganz besonders bevorzugt weniger als 10 beträgt.

11. Faserstoffpellets, enthaltend Faserstoffe gemäß Anspruch 9 sowie gegebenenfalls übliche Bindemittel und/oder Pelletierungshilfsstoffe.

12. Verwendung von Faserstoffen gemäß Anspruch 9 oder Faserstoffpellets gemäß Anspruch 11 als stabilisierender Zuschlagstoff für Splittmastixasphalt.

13. Splittmastixasphalt, enthaltend neben Gestein, Bitumen bzw. Asphalt, Faserstoffe gemäß Anspruch 9.

14. Splittmastixasphalt, gemäß Anspruch 13, **dadurch gekennzeichnet, dass** dieser zwischen 0,1 und 0,5 Gew.-% Faserstoffe, bevorzugt zwischen 0,2 und 0,4 Gew.-% und besonders bevorzugt 0,3 Gew.-% Faserstoffe enthält.

## Claims

1. Method for the manufacture of fibrous materials as stabilising additive for stone mastic asphalt, wherein the following steps are performed:
a) Pre-shredding of the fibrous raw materials from a fibrous raw material source;
b) Shredding of the fibrous raw materials in a screw extruder such that the slenderness ratio of the fibrous material obtained is less than 25, wherein the water content in the screw extruder is 30 to 75% and the temperature is 100 to 150°C.

2. Method, according to claim 1, **characterised in that** the following intermediate steps are performed after step a):
a1) Metering of fibrous raw materials from various fibrous raw material sources pre-shredded in step a) and
a2) Mixing of pre-shredded fibrous raw materials originating from various fibrous raw material sources.

3. Method, according to one of the foregoing claims, **characterised in that** a further shredding step is performed after step b):
c) Shredding of the fibrous materials obtained in step b) by means of a disc mill.

4. Method, according to one of the foregoing claims, **characterised in that** the following steps are performed after step b) or step c): d) Drying of the fibrous materials obtained.

5. Method, according to one of the foregoing claims, **characterised in that** the fibrous materials obtained are pelletised, wherein the pelletising is performed, if necessary, with the addition of binders and, if necessary, the pelletising performed simultaneously as post-grinding.

6. Method, according to one of the foregoing claims, **characterised in that** in step b) as screw extruder a single-screw extruder, a twin-screw extruder or a screw press is used.

7. Method, according to one of the claims 3 to 6, **characterised in that** in step c) the water content in the disc mill at a grinding gap of 0.1 to 0.3 mm is at most 60% in step c).

8. Method, according to one of the foregoing claims, **characterised in that** as source of fibrous material dry-preserved or moist-preserved whole plants or parts of plants such as hemp, flax, linseed, legumes, maize, rapeseed, grain, miscanthus, reeds, grass or landscape management material, or shrubs such as poplar, willow and robinia from short-rotation plantations or waste paper as well as cellulose-containing residues from the paper industry or wood or fermentation residues from biogas production or brewer's grain, especially spent grain, as well as mixtures of the named fibrous raw material sources are used.

9. Fibrous materials, manufactured according to a method according to the claims 1 to 8.

10. Fibrous materials, according to claim 9, **characterised in that** the slenderness ratio of the fibrous materials is less than 25, preferably less than 20, especially preferred less than 15 and very especially preferred less than 10.

11. Fibrous material pellets containing fibrous materials according to claim 9 as well as, if necessary, usual binding agents and/or pelletising auxiliary materials.

12. Use of fibrous materials according to claim 9 or fibrous material pellets according to claim 11 as stabilising additive for stone mastic asphalt.

13. Stone mastic asphalt containing, in addition to stones, bitumen and, respectively asphalt, fibrous materials according to claim 9.

14. Stone mastic asphalt, according to claim 13, **characterised in that** it contains between 0.1 and 0.5 wt % fibrous materials, preferably between 0.2 and 0.4 wt. % and especially preferred 0.3 wt. % fibrous materials.

## Revendications

1. Procédé de fabrication de matières fibreuses en tant que matière de charge stabilisante pour de l'asphalte Splittmastix, les étapes suivantes étant exécutées:
a) broyage préalable des fibres brutes provenant d'une source de fibres brutes;
b) broyage des fibres brutes dans une extrudeuse à vis sans fin, de sorte que le coefficient d'élancement des matières fibreuses obtenues soit inférieur à 25, la teneur en eau dans l'extrudeuse à vis sans fin soit comprise entre 30 et 75% et la température entre 100 et 150°C.

2. Procédé, selon la revendication 1, **caractérisé en ce que** les étapes intermédiaires suivantes sont exécutées après l'étape a):
a1) dosage des fibres brutes provenant de différentes source de fibres brutes pré-broyées en étape a) et
a2) mélange des fibres brutes pré-broyées provenant de diverses sources de fibres brutes.

3. Procédé, selon l'une des revendications précédentes, **caractérisé en ce qu'**une autre étape de broyage est exécutée après l'étape b):
c) broyage des matières fibreuses obtenues en étape b) par un broyeur à disques.

4. Procédé, selon l'une des revendications précédentes, **caractérisé en ce que** l'étape suivante est exécutée après l'étape b) ou l'étape c): d) séchage des matières fibreuses obtenues.

5. Procédé, selon l'une des revendications précédentes, **caractérisé en ce que** les matières fibreuses obtenues sont pelletisées, la pelletisation étant le cas échéant exécutée en ajoutant des liants, et le cas échéant exécutée simultanément comme post-broyage.

6. Procédé, selon l'une des revendications précédentes, **caractérisé en ce que** l'extrudeuse à vis sans fin utilisée en étape b) est une extrudeuse à vis simple, une extrudeuse à vis double ou une presse à vis.

7. Procédé, selon l'une des revendications 3 à 6, **caractérisé en ce qu'**en étape c), la teneur en eau dans le broyeur à disques est au maximum de 60 % pour une fente de broyage de 0,1 à 0,3 mm.

8. Procédé, selon l'une des revendications précédentes, **caractérisé en ce que** les sources de fibres brutes sont des plantes entières ou des parties de plantes conservées par voie sèche ou humide, telles que le chanvre, le lin, le lin oléagineux, les légumineuses, le maïs, le colza, les céréales, le miscanthus, le roseau, l'herbe ou les déchets verts ou des essences de bois telles que le peuplier, le saule et le robinier provenant de taillis à courte rotation, ou des vieux papiers ainsi que des matières cellulosiques résiduelles de l'industrie papetière ou du bois ou des digestats de la production de biogaz ou des drêches, en particulier des drêches de brasserie, ainsi que des mélanges des sources de fibres brutes susmentionnées.

9. Matières fibreuses, fabriquées avec un procédé selon les revendications 1 à 8.

10. Matières fibreuses, selon la revendication 9, **caractérisé en ce que** le coefficient d'élancement des matières fibreuses est inférieur à 25, avantageusement inférieur à 20, préférentiellement inférieur à 15 et tout particulièrement inférieur à 10.

11. Pellets de matières fibreuses, contenant des matières fibreuses selon la revendication 9 et le cas échéant des liants et/ou des adjuvants de pelletisation.

12. Utilisation de matières fibreuses selon la revendication 9 ou de pellets de matières fibreuses selon la revendication 11 comme matière de charge stabilisante pour l'asphalte Splittmastix.

13. Asphalte Splittmastix, contenant des matières fibreuses selon la revendication 9 en plus de granulats, de bitumes ou de l'asphalte.

14. Asphalte Splittmastix, selon la revendication 13, **caractérisé en ce qu'**il contient entre 0,1 et 0,5 % en poids, avantageusement entre 0,2 et 0,4 % en poids, et préférentiellement 0,3 % en poids de matières fibreuses.
